# EUROPEAN PATENT SPECIFICATION

(11) **EP 2 993 722 B1**
(45) Date of publication and mention of the grant of the patent: **24.10.2018**
(21) Application number: 14183938.1
(22) Date of filing: 08.09.2014
(51) Int. Cl.: H01M 8/04, G05B 23/02

(54) **Monitoring device**
Überwachungsvorrichtung
Dispositif de surveillance

(43) Date of publication of application: 09.03.2016
(73) Proprietor: ROBERT BOSCH GMBH, 70469 Stuttgart (DE); Aisin Seiki Kabushiki Kaisha, Kariya-shi Aichi 448-8650 (JP)
(72) Inventor: Limbeck, Uwe, 73230 Kirchheim unter Teck (DE); Friede, Wolfgang, 71384 Weinstadt (DE); Herbert, Christian, 70327 Stuttgart-Untertürkheim (DE); Sato, Toshiyuki, Kariya-shi, Aichi 448-8650 (JP)
(74) Representative: Daub, Thomas

(56) References cited:
- US-A1- 2008 042 841
- US-A1- 2008 182 215
- US-A1- 2010 200 664
- US-A1- 2013 158 757
- Wayne Goodwin ET AL: "CO Alarms: The End of Life Warning", , 8 August 2011 (2011-08-08), XP055361653, Retrieved from the Internet: URL:http://www.ci.burlington.nc.us/Documen tCenter/Home/View/2248 [retrieved on 2017-04-04]
- Kidde: "New California Smoke Alarm Law to Help Save Lives", , 30 June 2014 (2014-06-30), XP055361773, Retrieved from the Internet: URL:http://www.prnewswire.com/news-release s/new-california-smoke-alarm-law-to-help-s ave-lives-265227691.html [retrieved on 2017-04-05]

## Description

The invention relates to a monitoring device according to the preamble of Patent Claim 1.

A monitoring device with a sensor unit which is provided to detect a combustible gas within a heating system is already known. In particular the sensor unit has, due to aging and/or due to a capacity of an internal energy source, e.g. a battery, a limited lifespan. To avoid breakdown of the monitoring device and thus ensuring a safe operation of the heating system, it is required to observe maintenance and/or replacemnt intervals. These intervals must be monitored at huge expense, wherein control of observance of maintenance and/or replacement intervals is not possible.

US 2010/0200664 A1 discloses a monitoring device, in particular a heating system monitoring device, with a sensor unit which is provided to detect at least one gas, in particular at least one combustible and/or toxic gas, and with a timekeeping unit, which is provided to capture at least a lifespan characteristic of the sensor unit.

Moreover, documents "CO Alarms: The End of Life Warning, Goodwin'11" and "New California Smoke Alarm Law to Help Save Lives, Kidde'14" disclose carbon monoxide and smoke alarms which are sealed and tamper-proof.

### Disclosure of the invention

The invention is based on a monitoring device, in particular a heating system monitoring device, with a sensor unit which is provided to detect at least one gas, in particular at least one combustible and/or toxic gas, with a timekeeping unit, which is provided to capture at least a lifespan characteristic of the sensor unit.

It is proposed that the timekeeping unit is non-detachably connected to the sensor unit, wherein the timekeeping unit is embodied in one piece with the sensor unit, wherein the timekeeping unit is provided to modify an output signal of the sensor unit when at least one lifespan limit value is exceeded, wherein the timekeeping unit is adapted to influence the output signal in such a way that it assumes a value outside a measuring range of the sensor unit.

By a "monitoring device", in this context, in particular a device is to be understood which is provided to capture and/or measure a presence and/or preferably a concentration of an in particular combustible and/or toxic gas and/or of an in particular combustible and/or toxic gas mixture, in particular inside a building and/or an installation room of a heating system. A "sensor unit" is to mean, in this context, in particular a unit which is provided to capture in particular physical and/or chemical properties and/or the material constitution of its surroundings in terms of quality and/or as a measurement in terms of quantity. In particular, the sensor unit can comprise at least one catalytic heat tone sensor and/or at least one infrared sensor. "Provided" is to mean in particular specifically programmed, designed and/or equipped. By an object being provided for a certain function, it is to be understood in particular that the object fulfills and carries out this certain function in at least one application state and/or operation state. A "timekeeping unit" is to mean, in this context, in particular a unit which is provided to capture at least one time interval, in particular directly and/or indirectly, e.g. by way of an external clock signal. A "lifespan characteristic" is to mean, in this context, in particular a characteristic containing at least one information regarding an in particular effective lifespan of the sensor unit. A start of a timekeeping by the timekeeping unit can be effected in particular directly following and/or during manufacturing of the monitoring device and/or with a first supply of the monitoring device with electrical energy and/or with installation of the monitoring device in particular in and/or at a heating system.

By such an implementation a monitoring device having advantageous operative features, in particular an enhanced operating safety, can be provided. In particular, an effective lifespan of the sensor unit can be captured or determined by the timekeeping unit in an advantageously simple and/or reliable manner.

By the timekeeping unit being "non-detachably" connected to the sensor unit it is in particular intended to be understood that the timekeeping unit can only be separated from the sensor unit in a damaging or destructive manner. In particular, the timekeeping unit can be embodied in one piece with the sensor unit. "In one piece" is to mean, in particular, at least materially connected, e.g. by a soldering process, an adhesive bonding process, an injection process and/or another process deemed expedient by a person skilled in the art, and/or to mean, advantageously, formed in one piece, e.g. in an integrated circuit. Hereby it can be advantageously prevented that the timekeeping unit is separated from the sensor unit and/or is replaced. A manipulation of a lifespan monitoring of the sensor unit is thus advantageously avoidable.

Furthermore, it is proposed that the timekeeping unit is provided to output at least one signal when at least one lifespan limit value is exceeded. A "lifespan limit value" is to be understood, in this context, to be in particular a limit value that corresponds to a termination of a maximum lifespan of the sensor unit and/or to a termination of a maintenance and/or replacement interval of the sensor unit. The at least one lifespan limit value can be stored in particular in a memory of the timekeeping unit. In particular, during operation of the monitoring device an in particular continuous calibration may be carried out between the at least one lifespan characteristic and the at least one lifespan limit value. A "signal" is to mean, in this context, in particular an optical and/or acoustical and/or preferably digital or analogous electrical signal which is provided to signal exceeding of the at least one lifespan limit value to a user of the monitoring device and/or preferentially to a control and/or regulation unit interconnected with the monitoring device. According to an example described below, which is not part of the claimed invention, in the case of an electrical signal, transfer of the at least one signal may be effected by way of a separate signal line or via a bus line which can in particular transfer the at least one signal and/or an output signal of the sensor unit, as a result of which exceeding a maximum lifespan of the sensor unit and/or a termination of a maintenance and/or replacement interval can be signaled. The control and/or regulation unit may be a two fault safe controller, especially built up using two independent electric or electronic circuits with mutual supervision. In this case, the signal of the sensor and the timekeeping unit can be provided to one or both independent circuits.

In the above example, a modification of the output signal of the sensor unit may be effected in particular by opening an electronic or mechanical switch in at least one output signal line of the sensor unit and/or by shortcutting at least two output signal lines and/or by interrupting at least one output signal line of the sensor unit. According to the invention, the timekeeping unit influences an output signal in such a way that it assumes a value outside a measuring range of the sensor unit. Hereby a signaling, an exceeding the maximum lifespan of the sensor unit and/or a termination of a maintenance and/or replacement interval can be advantageously simplified. It is in particular possible to do without using a separate signal line and/or a bus system.

Furthermore, it is proposed that the timekeeping unit comprises a memory unit which is provided to at least temporarily store at least one lifespan characteristic. By a "memory unit", in this context, in particular a unit with a non-volatile memory is to be understood. The memory unit is in particular provided to store, in the case of an interruption of an energy supply of the monitoring unit, a current lifespan characteristic of the timekeeping unit until the energy supply of the monitoring device has been restored. A faulty lifespan monitoring due in particular to energy supply interruption can thus advantageously be prevented.

Further a heating system is proposed, with a heat generating unit which is provided to be operated with at least one combustible gas, liquid or solid, with a control and/or regulation unit which is provided to control and/or regulate a feed-in of the combustible gas, liquid or solid, and with a monitoring device according to the invention. A "heating system" is to mean in particular a system which is in particular provided to be installed inside a building and which is provided to generate and/or store and/or distribute thermal energy preferably to the purpose of heating rooms. In particular, the heating system may be provided for heating and/or storage and/or distribution of potable water and/or process water and/or for supplying at least one heating cycle. A "heat generating unit" is to be understood, in this context, in particular as a unit which is provided to generate and/or make usable thermal energy, in particular using at least one energy carrier and/or by way of a chemical reaction. The heat generating unit herein preferably has a heat output of less than 40 kW, in particular less than 20 kW, preferentially less than 5 kW and particularly advantageously less than 1 kW. In particular, the heat generating unit can be implemented as a fuel cell unit. The monitoring device is, in particular together with the heat generating device, arranged inside a building and/or inside an installation room of the heating system. Feed-in of the at least one combustible gas can be effected in particular via a valve unit connected upstream of the heat generating unit, which valve unit comprises at least one in particular electromotorically actuated valve and/or, in particular, an electromagnetically actuated valve. Controlling and/or regulating the feed-in of the at least one combustible gas is effected in particular by complete and/or at least partial opening and/or closing the at least one valve of the valve unit, said opening and/or closing being in particular initiated by the control and/or regulation unit. A "fuel cell unit" is intended to mean, in this context, in particular a unit for stationary and/or mobile generating of in particular electrical and/or thermal energy using at least one fuel cell, which fuel cell is provided to convert at least a chemical reaction energy of at least one fuel gas, in particular hydrogen and/or carbon monoxide, which fuel gas is in particular fed-in continuously, and of at least one oxidation means, in particular oxygen from air, in particular into electrical and/or thermal energy. The at least one fuel cell may be embodied in particular as a solid oxid fuel cell (SOFC). Preferably the at least one fuel cell unit comprises a plurality of fuel cells, which are in particular arranged in a fuel cell stack. Hereby an advantageously reliable and/or failsafe capturing of combustible and/or toxic gases and/or combustible and/or toxic gas mixtures inside the heating system may be made possible.

Furthermore, it is proposed that the monitoring device is provided to output at least one signal to the control and regulation unit when at least one lifespan limit value is exceeded. According to the invention, the at least one signal can be outputted to the control and/or regulation unit by modifying an output signal of the sensor unit, as a result of which an exceeding of a maximum lifespan of the sensor unit and/or a termination of a maintenance and/or replacement interval may be signaled to the control and/or regulation unit in an advantageously simple and/or reliable manner.

It is also proposed that the control and/or regulation unit is provided, on receiving the at least one signal of the monitoring device, to interrupt feed-in of the at least one combustible gas, liquid or solid. An interruption of a feed-in of the at least one combustible gas, liquid or solid may be effected in particular by closing the at least one valve of the valve unit. It may hereby be advantageously achieved that the heating system is safely put out of service, when a maximum lifespan of the sensor unit is exceeded and/or a maintenance and/or replacement interval is terminated. A controlled shutdown procedure of the system may be executed before interrupting the feed-in of the at least one combustible gas, liquid or solid in order to protect the system against ageing.

Further a method for operating a heating system is proposed, with a heat generating unit which is provided to be operated with at least one combustible gas, liquid or solid, with a control and/or regulation unit which is provided to control and/or regulate a feed-in of the at least one combustible gas, liquid or solid, and with a monitoring device comprising a sensor unit which is provided to detect the at least one combustible and/or toxic gas and a timekeeping unit, which is non-detachably connected to the sensor unit, wherein at least one lifespan characteristic of the sensor unit is captured by the timekeeping unit, wherein the timekeeping unit is embodied in one piece with the sensor unit, wherein an output signal of the sensor unit is modified by the timekeeping unit when at least one lifespan limit value is exceeded, wherein the output signal is influenced by the timekeeping unit in such a way that it assumes a value outside a measuring range of the sensor unit, wherein at least one signal is outputted from the monitoring device to the control and/or regulation unit when at least one lifespan limit value is exceeded, wherein on the control and/or regulation unit receiving the at least one signal of the monitoring device, the feed-in of the combustible gas is interrupted. It may hereby be advantageously achieved that the heating system is safely put out of service, in particular when a maximum lifespan of the sensor unit is exceeded and/or a maintenance and/or replacement interval is terminated.

The monitoring device according to the invention is herein not to be restricted to the application and implementation described above. In particular, for fulfilling a function herein described, the heating system according to the invention may comprise a number of individual elements, components and units, which differs from the number herein mentioned.

### Drawing

Further advantages may be gathered from the following description of the drawing. In the drawing one exemplary embodiment of the invention is shown. The drawing, the description and the claims comprise a plurality of features in combination. The person skilled in the art will expediently also consider the features individually and will bring them together in further purposeful combinations.

The drawing shows:
- In fig. 1: a schematic view of a heating system with a heat generating unit which is operated with a combustible gas, with a control and/or regulation unit which controls and/or regulates a feed-in of the combustible gas, and with a monitoring device which is arranged inside a housing of the heating system, and
- In fig. 2: a schematic detail view of the monitoring device of figure 1, with a sensor unit and a timekeeping unit.

### Description of the exemplary embodiment

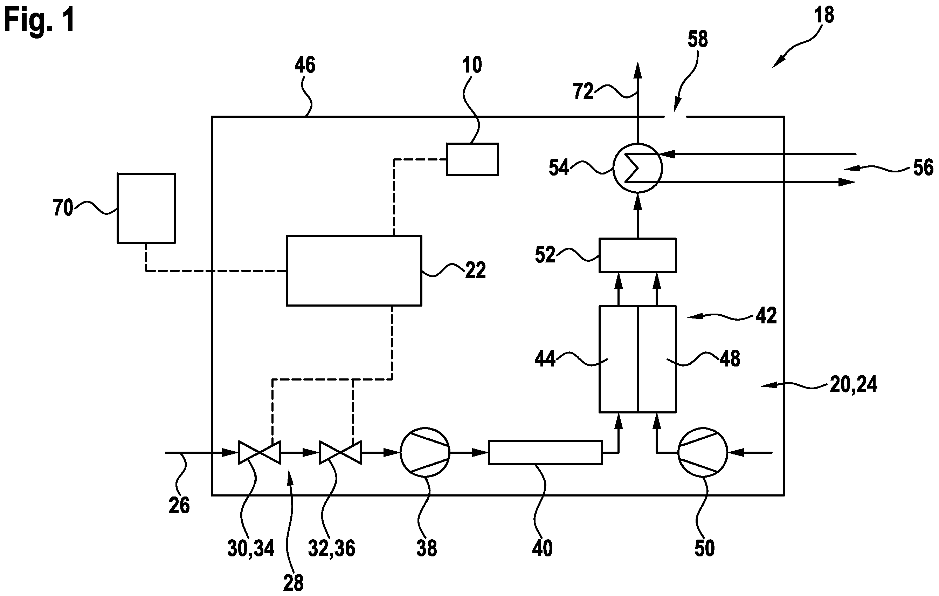

Figure 1 shows a schematic view of a heating system 18. The heating system 18 comprises a heat generating unit 20, which is here embodied, as an example, as a fuel cell unit 24. The heating system 18 further comprises a housing 46 which encompasses the heat generating unit 20. From a gas supply line 26 a combustible gas, e.g. a natural gas from a natural gas supply network, is fed to the heating system 18. Feed-in of the combustible gas can be controlled and/or regulated and/or entirely interrupted by a valve unit 28. The valve unit 28 comprises here, as an example, two valves 30, 32 which are preferably electro-magnetically actuatable. In particular, a first valve 30 may be embodied as a switching valve 34 while a second valve 32 may in particular be embodied as a regulating valve 36. By means of a compressor 38 sufficient flow-rate of the components of the heating system 18 is ensured.

An anode gas processor 40 is connected downstream of the compressor 38. As an alternative, an anode gas processor can be connected, entirely or at least partially, upstream of a compressor. The anode gas processor 40 comprises a desulfuration unit and a reformer unit (not shown here) and is provided for obtaining a hydrogen-rich gas having a low sulfur content. The hydrogen-rich gas leaving the anode gas processor 40 is fed to an anode 44 of a fuel cell stack 42, which is depicted here in a simplified manner. Air from an interior compartment of the housing 46 is fed to a cathode 48 of the fuel cell stack 42 by means of a further compressor or fan 50. An exhaust gas of the anode 44 and air from the cathode 48 of the fuel cell stack 42 are fed to an afterburner unit 52 in which afterburning of combustible components remaining in the anode exhaust gas is effected. Thermal energy herein released is transferred, for example, to a heating water circulation 56 via a heat exchanger 54. An exhaust gas is discharged via a chimney 72, while air flows in into the housing 46 by an opening 58 in the housing 46. Chimney 72 and opening 58 may be connected to a double pipe, for example concentric, chimney system (not shown).

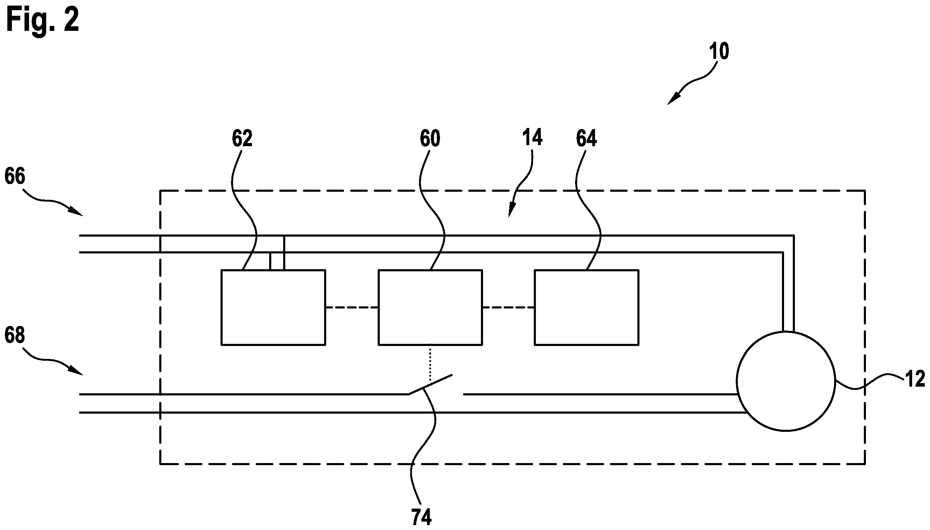

In addition to the heat generating unit 20 a monitoring device 10 is arranged inside the housing 46. Figure 2 shows a schematic detail view of the monitoring device 10. The monitoring device 10 comprises a sensor unit 12, which is provided to detect at least one combustible gas inside the housing 46 and/or to capture a concentration of the at least one combustible gas inside the housing 46. The at least one combustible gas can, for example, exit by leakages inside the heat generating unit 20 and/or fluid lines into the housing 46, as a result of which an explosive and/or toxic gas mixture may form inside the housing 46. The sensor unit 12 preferably has at least an infrared sensor and/or a catalytic heat tone sensor, as a result of which in particular hydrocarbon-containing combustible gases and/or hydrogen can be detected. When a concentration of the at least one combustible and/or toxic gas in the housing 46 exceeds a limit value, the sensor unit 12 sends a signal to a control and/or regulation unit 22, which then closes the valves 30, 32 of the valve unit 28. Feed-in of combustible gas is thus interrupted and further accumulation of the at least one combustible and/or toxic gas inside the housing 46 is prevented.

Furthermore, the monitoring device 10 comprises a timekeeping unit 14. The timekeeping unit 14 is provided to capture a lifespan characteristic by which a conclusion on an effective lifespan of the sensor unit 12 may be drawn. The timekeeping unit 14 comprises, besides a timekeeper 60, an energy supply unit 62 and a memory unit 64. The energy supply unit 62 supplies the timekeeper 60 with electrical energy, which is in the present example taken from a supply line 66 of the sensor unit 12. As an alternative, an energy supply unit may also be implemented, for example, as a battery. The memory unit 64 is provided to store, when an energy supply is interrupted, a current lifespan characteristic of the timekeeper 60 until the energy supply is restored. The sensor unit 12 and the timekeeping unit 14 are non-detachably connected to each other, such that the timekeeping unit 14 is only separable from the sensor unit 12 in a destructive manner. In particular, the timekeeping unit 14 can be entirely integrated in an electronic circuit of the sensor unit 12.

Capturing of the lifespan characteristic by the timekeeping unit 14 may be started, for example, with installation of the monitoring device 10 into the heating system 18. When a lifespan limit value is exceeded, a signal is outputted to the control and/or regulation unit 22 by the monitoring device 10. An exceeding of the lifespan limit value may herein, in particular, correspond to an exceeding of a maximum lifespan of the sensor unit 12 and/or a termination of a maintenance and/or replacement interval of the sensor unit 12. This signal can be generated by a modification of an output signal of the sensor unit 12. In an example, which is not part of the present invention, the timekeeper 60 actuates an e.g. electronic switch 74 when the lifespan limit value is exceeded, as a result of which an output signal line 68 of the sensor unit 12 is interrupted as shown in figure 2. This interruption of the output signal line 68 is captured by the control and/or regulation unit, following which the valves 30, 32 of the valve unit 28 are closed by the control and/or regulation unit 22. In parallel to closing of the valves 30, 32, a corresponding information may be outputted to an operator of the heating system 18 via a display unit 70.

To simplify signalling of an exceeding of a maximum lifespan of the sensor unit, according to the invention instead of interrupting the output line, the output signal is influenced in such a way that it assumes a value outside a measuring range of the sensor unit.

## Claims

1. A monitoring device (10), in particular a heating system monitoring device, with a sensor unit (12) which is provided to detect the concentration of at least one gas, in particular at least one combustible and/or toxic gas, with a timekeeping unit (14), which is provided to capture at least a lifespan characteristic of the sensor unit (12), **characterized in that** the timekeeping unit (14) is non-detachably connected to the sensor unit (12), wherein the timekeeping unit (14) is embodied in one piece with the sensor unit (12), wherein the timekeeping unit (14) is provided to modify an output signal of the sensor unit (12) when at least one lifespan limit value is exceeded, wherein the timekeeping unit (14) is adapted to influence the output signal in such a way that it assumes a value outside a measuring range of the sensor unit (12).

2. The monitoring device (10) according to Claim 1, **characterized in that** the timekeeping unit (14) is provided to output at least a signal when at least one lifespan limit value is exceeded.

3. The monitoring device (10) according to Claim 1 or Claim 2, **characterized in that** the timekeeping unit (14) comprises a memory unit (64) which is provided to at least temporarily store at least one lifespan characteristic.

4. A heating system (18) with a heat generating unit (20) which is provided to be operated with at least one combustible gas, liquid or solid, with a control and/or regulation unit (22) which is provided to control and/or regulate a feed-in of the at least one combustible gas, liquid or solid, and with a monitoring device (10) according to any one of Claims 1 to 3.

5. The heating system (18) according to Claim 4, **characterized in that** the monitoring device (10) is provided to output at least one signal to the control and/or regulation unit (22) when at least one lifespan limit value is exceeded.

6. The heating system (18) according to Claim 5, **characterized in that** the control and/or regulation unit (22) is provided, on receiving the at least one signal of the monitoring device (10), to interrupt feed-in of the at least one combustible gas, liquid or solid.

7. A method for operating a heating system (18) in particular according to any one of Claims 4 to 6, with a heat generating unit (20) which is provided to be operated with at least one combustible gas, with a control and/or regulation unit (22) which is provided to control and/or regulate a feed-in of the at least one combustible gas, and with a monitoring device (10) comprising a sensor unit (12) which is provided to detect the concentration of at least one combustible gas, and a timekeeping unit (14), which is non-detachably connected to the sensor unit (12), wherein at least one lifespan characteristic of the sensor unit (12) is captured by the timekeeping unit (14), wherein the timekeeping unit (14) is embodied in one piece with the sensor unit (12), wherein an output signal of the sensor unit (12) is modified by the timekeeping unit (14) when at least one lifespan limit value is exceeded, wherein the output signal is influenced by the timekeeping unit (14) in such a way that it assumes a value outside a measuring range of the sensor unit (12), wherein at least one signal is outputted from the monitoring device (10) to the control and/or regulation unit (22) when the at least one lifespan limit value is exceeded, wherein on the control and/or regulation unit (22) receiving the at least one signal of the monitoring device (10), the feed-in of the at least one combustible gas is interrupted.

## Patentansprüche

1. Eine Überwachungsvorrichtung (10), insbesondere Heizsystemüberwachungsvorrichtung, mit einer Sensoreinheit (12), die dazu vorgesehen ist, die Konzentration von wenigstens einem Gas, insbesondere wenigstens einem brennbaren und/oder giftigen Gas, zu detektieren, mit einer Zeiterfassungseinheit (14), die dazu vorgesehen ist, wenigstens einen Laufzeitkennwert der Sensoreinheit (12) zu erfassen, **dadurch gekennzeichnet, dass** die Zeiterfassungseinheit (14) unlösbar mit der Sensoreinheit (12) verbunden ist, wobei die Zeiterfassungseinheit (14) einstückig mit der Sensoreinheit (12) ausgebildet ist, wobei die Zeiterfassungseinheit (14) dazu ausgebildet ist, ein Ausgangssignal der Sensoreinheit (12) zu verändern, wenn wenigstens ein Laufzeitgrenzwert überschritten wird, wobei die Zeiterfassungseinheit (14) dazu vorgesehen ist, das Ausgangssignal so zu beeinflussen, dass es einen Wert außerhalb eines Messbereichs der Sensoreinheit (12) annimmt.

2. Die Überwachungsvorrichtung (10) nach Anspruch 1, **dadurch gekennzeichnet, dass** die Zeiterfassungseinheit (14) dazu vorgesehen ist, wenigstens ein Signal auszugeben, wenn wenigstens ein Laufzeitgrenzwert überschritten wird.

3. Die Überwachungsvorrichtung (10) nach Anspruch 1 oder Anspruch 2, **dadurch gekennzeichnet, dass** die Zeiterfassungseinheit (14) eine Speichereinheit (64) umfasst, die dazu vorgesehen ist, wenigstens einen Laufzeitkennwert wenigstens zeitweise zu speichern.

4. Ein Heizsystem (18) mit einer Wärmeerzeugungseinheit (20), die dazu vorgesehen ist, mit wenigstens einem brennbaren Gas, wenigstens einer brennbaren Flüssigkeit oder wenigstens einem brennbaren Feststoff betrieben zu werden, mit einer Steuer- und/oder Regeleinheit (22), welche dazu vorgesehen ist, eine Einspeisung von dem wenigstens einen brennbaren Gas, der wenigstens einen brennbaren Flüssigkeit oder dem wenigstens einen Feststoff zu steuern und/or zu regeln, und mit einer Überwachungsvorrichtung (10) nach einem der Ansprüche 1 bis 3.

5. Das Heizsystem (18) nach Anspruch 4, **dadurch gekennzeichnet, dass** die Überwachungsvorrichtung (10) dazu vorgesehen ist, wenigstens ein Signal an die Steuer- und/oder Regeleinheit (22) auszugeben, wenn wenigstens ein Laufzeitgrenzwert überschritten wird.

6. Das Heizsystem (18) nach Anspruch 5, **dadurch gekennzeichnet, dass** die Steuer- und/oder Regeleinheit (22) dazu vorgesehen ist, bei Empfang wenigstens eines Signals der Überwachungsvorrichtung (10) eine Einspeisung von dem wenigstens einen brennbaren Gas, der wenigstens einen brennbaren Flüssigkeit oder dem wenigstens einen brennbaren Feststoff zu unterbrechen.

7. Ein Verfahren zum Betrieb eines Heizsystems (18), insbesondere eines Heizsystems (18) nach einem der Ansprüche 4 bis 6, mit einer Wärmeerzeugungseinheit (20), die dazu vorgesehen ist, mit wenigstens einem brennbaren Gas betrieben zu werden, mit einer Steuer- und/oder Regeleinheit (22), welche dazu vorgesehen ist, eine Einspeisung von dem wenigstens einen brennbaren Gas zu steuern und/oder zu regeln, und mit einer Überwachungsvorrichtung (10), die eine Sensoreinheit (12) umfasst, die dazu vorgesehen ist, die Konzentration von wenigstens einem brennbaren Gas zu detektieren, und mit einer Zeiterfassungseinheit (14), die unlösbar mit der Sensoreinheit (12) verbunden ist, wobei wenigstens ein Laufzeitkennwert der Sensoreinheit (12) von der Zeiterfassungseinheit (14) erfasst wird, wobei die Zeiterfassungseinheit (14) einstückig mit der Sensoreinheit (12) ausgebildet ist, wobei ein Ausgangssignal der Sensoreinheit (12) durch die Zeiterfassungseinheit (14) verändert wird, wenn wenigstens ein Laufzeitgrenzwert überschritten wird, wobei das Ausgangssignal von der Zeiterfassungseinheit (14) so beeinflusst wird, dass es einen Wert außerhalb eines Messbereichs der Sensoreinheit (12) annimmt, wobei von der Überwachungsvorrichtung (10) wenigstens ein Signal an die Steuer- und/oder Regeleinheit (22) ausgegeben wird, wenn der wenigstens eine Laufzeitgrenzwert überschritten wird, wobei die Einspeisung des wenigstens einen brennbaren Gases unterbrochen wird, wenn die Steuer- und/oder Regeleinheit (22) das wenigstens eine Signal von der Überwachungsvorrichtung (10) empfängt.

## Revendications

1. Dispositif de surveillance (10), notamment dispositif de surveillance d'un system à chauffage, avec une unité capteur (12) configurée à détecter une concentration d'au moins un gaz, notamment au moins un gaz combustible et/ou toxique, avec une unité chronométrique (14) configurée à capter au moins une caractéristique de durée de service de l'unité capteur (12), **caractérisé en ce que** l'unité chronométrique (14) est raccordée à l'unité capteur (12) de façon non-détachable,
l'unité chronométrique (14) étant implémentée intégralement avec l'unité capteur (12), l'unité chronométrique (14) étant configurée à modifier un signal de sortie de l'unité capteur (12) si au moins une valeur limite de durée de service est dépassée,
l'unité chronométrique (14) étant configurée à influencer le signal de sortie de telle manière qu'il assume une valeur en dehors d'une plage de mesure de l'unité capteur (12).

2. Dispositif de surveillance (10) selon la revendication 1, **caractérisé en ce que** l'unité chronométrique (14) est configurée à émettre au moins un signal si au moins une valeur limite de durée de service est dépassée.

3. Dispositif de surveillance (10) selon l'une des revendications 1 ou 2, **caractérisé en ce que** l'unité chronométrique (14) comporte une unité mémoire (64) configurée à au moins temporairement sauvegarder au moins une caractéristique de durée de service.

4. Système de chauffage (18) avec une unité générateur de chaleur (20) configurée à être opérée avec au moins un gaz, liquide ou solide combustible, avec une unité de contrôle et/ou régulation (22) configurée à contrôler et/ou régler une alimentation de l'au moins un gaz, liquide ou solide combustible, et avec un dispositif de surveillance (10) selon l'une quelconque des revendications 1 à 3.

5. Système de chauffage (18) selon la revendication 4, **caractérisé en ce que** le dispositif de surveillance (10) est configuré à émettre au moins un signal à l'unité de contrôle et/ou régulation (22) si au moins une valeur limite de durée de service est dépassée.

6. Système de chauffage (18) selon la revendication 4, **caractérisé en ce que** l'unité de contrôle et/ou régulation (22) est configurée, en recevant l'au moins un signal du dispositif de surveillance (10), à interrompre l'alimentation de l'au moins un gaz, liquide ou solide combustible.

7. Procédé pour opérer un système de chauffage (18), notamment système de chauffage (18) selon l'une quelconque des revendications 4 à 6, avec une unité générateur de chaleur (20) configurée à être opérée avec au moins un gaz combustible,
avec une unité de contrôle et/ou régulation (22) configurée à contrôler et/ou régler une alimentation de l'au moins un gaz combustible,
et avec une unité de surveillance (10) comportant une unité capteur (12) configurée à détecter une concentration d'au moins un gaz combustible, et
une unité chronométrique (14), laquelle est raccordée à l'unité capteur (12) de façon non-détachable,
au moins une caractéristique de durée de service de l'unité capteur (12) étant captée par l'unité chronométrique (14),
l'unité chronométrique (14) étant implémentée intégralement avec l'unité capteur (12), un signal de sortie étant modifié par l'unité chronométrique (14) si au moins une valeur limite de durée de service est dépassée, un signal de sortie de l'unité capteur (12) étant modifié par l'unité chronométrique (14) si au moins une valeur limite de durée de service est dépassée, le signal de sortie étant influencé par l'unité chronométrique (14) de telle manière qu'il assume une valeur en dehors d'une plage de mesure de l'unité capteur (12), l'au moins un signal étant sorti du dispositif de surveillance (10) à l'unité de contrôle et/ou régulation (22) si l'au moins une valeur limite de durée de service est dépassée, l'alimentation de l'au moins un gaz combustible étant interrompue si l'unité de contrôle et/ou régulation (22) reçoit l'au moins un signal du dispositif de surveillance (10).
